# EUROPÄISCHE PATENTANMELDUNG

(11) **EP 3 372 848 A1**
(43) Veröffentlichungstag der Anmeldung: **12.09.2018**
(21) Anmeldenummer: 17159524.2
(22) Anmeldetag: 07.03.2017
(51) Int. Cl.: F16B 13/06, F16B 13/04

(54) **VERWENDUNG EINES SPREIZANKERS MIT ANGESCHRAUBTEM ANKERKOPF**

(71) Anmelder: HILTI Aktiengesellschaft, 9494 Schaan (LI)
(72) Erfinder: Haeussler, Karl, 7222 Lunden (CH); Ziltener, Michael, 8854 Siebnen (CH)
(74) Vertreter: Hilti Aktiengesellschaft Corporate Intellectual Property

(57) **Zusammenfassung**

Die Erfindung betrifft die Verwendung einer Ankeranordnung bestehend aus einem Spreizanker (1), der einen Spreizmechanismus (2) und hinter dem Spreizmechanismus (2) ein Aussengewinde(18) aufweist, und aus einem Ankerkopf (20), der ein zum Aussengewinde (18) des Spreizankers (1) korrespondierendes Innengewinde aufweist und mit dem Spreizanker (1) in einer Montage-Verschraubungsposition verschraubt ist, mit
- einem Montageschritt, in welchem der Spreizanker (1) durch ein Anbauteil hindurch in ein Substrat eingesteckt wird und das Anbauteil mittels der Ankeranordnung am Substrat gesichert wird, wobei der Ankerkopf (20) während des Montageschritts in der Montage-Verschraubungsposition am Spreizanker (1) verbleibt, und
- einem dem Montageschritt nachfolgenden Demontageschritt, in welchem die Montage-Verschraubungsposition aufgehoben und der Ankerkopf (20) vom Spreizanker (1) abgeschraubt wird.

## Beschreibung

Die Erfindung betrifft die Verwendung einer Ankeranordnung aufweisend einen Spreizanker sowie einen mit dem Spreizanker verschraubten Ankerkopf, gemäss Anspruch 1.

Es sind, beispielsweise aus der US 2016238051 A1, Anordnungen bekannt, bei denen ein Anbauteil mittels einer Mutter, die mit einem Spreizanker verschraubt ist, an einem Substrat gehalten ist. Bei der Montage einer solchen Anordnung wird zunächst der Anker in das Substrat eingesteckt. Durch anschliessendes Anziehen der Mutter am Spreizanker wird der Spreizanker vorgespannt und dabei der Spreizmechanismus des Ankers aktiviert und zugleich das Anbauteil am Substrat gesichert. Soll bei derartigen Spreizankern das Anbauteil wieder demontiert werden, so könnte die Ankermutter wieder abgeschraubt und das Anbauteil abgenommen werden.

Weiterhin sind, beispielsweise aus der DE 102013112959 A1, Spreizanker bekannt, welche einen fest mit dem Ankerbolzen des Spreizankers verbundenen Ankerkopf aufweisen. Bei Ankern mit fest verbundenem Ankerkopf kann der Spreizmechanismus regelmässig allein durch die Last am Anbauteil aktiviert werden. Insbesondere ist hier kein Anziehen einer Mutter erforderlich. Dafür kann der Einsatzbereich auf eher einfache Lastsituationen beschränkt sein. Soll bei Ankern mit fest verbundenem Ankerkopf das Anbauteil wieder demontiert, was beispielsweise erforderlich sein kann, wenn eine mit dem Anker bestigte Brandschutzplatte zu Wartungszwecken demontiert werden muss, ist dies nicht durch einfaches Lösen einer Schraubverbindung möglich. Daher schlägt die DE 102013112959 A1 vor, den Ankerkopf des Spreizankers mit einer Art Zange vom Ankerbolzen abzutrennen.

Die DE 102010017722 A1 offenbart Spreizanker, bei denen der Ankerbolzen sowohl einen fest am Ankerbolzen angeordneten Ankerkopf als auch ein Aussengewinde aufweist. Das Aussengewinde soll es ermöglichen, den Spreizanker durch Aufschrauben einer Mutter wiederzuverwenden, nachdem der Ankerkopf zum Zwecke der Demontage des Anbauteils abgetrennt wurde. Das Abtrennen des Ankerkopfs soll gemäss DE 102010017722 A1 mittels eines Ankerbolzenschneiders oder eines Winkelschleifers erfolgen. Der Ankerbolzenschneider beziehungsweise der Winkelschleifer soll gemäss DE 102010017722 A1 an einer speziell hierfür vorgesehenen Position am Anker angesetzt werden, welche so angeordnet ist, dass das Aussengewinde nach dem Abtrennen des Ankerkopfs zugänglich wird.

Aufgabe der Erfindung ist es, eine Verwendung einer Ankeranordnung anzugeben, welche eine Montage eines Anbauteils an einem Substrat und eine darauffolgende Demontage des Anbauteils, beispielsweise zum Zwecke der Reparatur des Anbauteils oder zu Revisionszecken, in einer besonders einfachen, zuverlässigen und günstigen Weise ermöglicht, insbesondere auch im Hinblick auf eine darauffolgende Neumontage eines Anbauteils in besonders einfacher, zuverlässiger und günstiger Weise.

Die Aufgabe wird erfindungsgemäss durch eine Verwendung mit den Merkmalen des Anspruchs 1 gelöst. Bevorzugte Ausführungsformen sind in den abhängigen Ansprüchen angegeben.

Erfindungsgemäss ist ein Verwendungsverfahren vorgesehen, bei dem eine Ankeranordnung bestehend aus einem Spreizanker, der einen Spreizmechanismus und hinter dem Spreizmechanismus ein Aussengewinde aufweist, und aus einem Ankerkopf, der ein zum Aussengewinde des Spreizankers korrespondierendes Innengewinde aufweist und mit dem Spreizanker in einer Montage-Verschraubungsposition verschraubt ist, verwendet wird. Das Verwendungsverfahren umfasst einen Montageschritt, in welchem der Spreizanker durch ein Anbauteil hindurch in ein Substrat eingesteckt wird und das Anbauteil mittels der Ankeranordnung am Substrat gesichert wird, wobei der Ankerkopf während des Montageschritts in der Montage-Verschraubungsposition am Spreizanker verbleibt, und einen dem Montageschritt nachfolgenden Demontageschritt, in welchem die Montage-Verschraubungsposition aufgehoben und der Ankerkopf vom Spreizanker abgeschraubt wird.

Der Erfindung liegt die überraschende Erkenntnis zugrunde, dass auch bei Anwendungen, bei denen die Spreizanker nur vergleichsweise einfachen Lastsituationen ausgesetzt sind, beispielsweise beim Halten von Brandschutzplatten im Tunnelbau, und bei denen es ausreichend ist, die Spreizanker durch eine reine Axialbewegung und ohne schraubende Erzeugung der Vorspannung zu installieren, eine Verschraubung zwischen Spreizanker und Ankerkopf vorteilhaft sein kann. Betrachtet man lediglich die Herstellung und den Installationsvorgang der Spreizanker, so mag eine solche Verschraubung scheinbar unnötig oder gar unvorteilhaft erscheinen, da die entsprechend erforderlichen Gewinde einen höheren Herstellungsaufwand mit sich bringen können. Der Vorteil tritt jedoch zutage, wenn auch eine möglicherweise später erforderliche Demontage und eventuelle Neumontage der Anbauteile

in die Betrachtung einbezogen wird. Im Gegensatz beispielsweise zu bekannten Konzepten, bei denen der Spreizanker bei der Demontage zerstört wird, ermöglicht die erfindungsgemässe Verschraubung einerseits eine besonders einfache, zuverlässige und schnelle Demontage des Anbauteils, andererseits ist auch eine Neumontage des demontierten oder eines neuen Anbauteils in besonders einfacher, schneller und zuverlässiger Art und Weise möglich, indem der demontierte Ankerkopf oder ein neuer Ankerkopf wieder aufgeschraubt wird.

Hier setzt die Erfindung an und sieht eine Ankeranordnung mit einem Spreizanker vor, auf dem ein Ankerkopf aufgeschraubt ist. Im Gegensatz zu einem vorbekannten Montageverfahren, bei dem der Ankerkopf zum Erzeugen einer Vorspannung im Spreizanker angezogen wird, bleibt nach der Erfindung die Verschraubung zwischen Ankerkopf und Spreizanker jedoch während der Montage der Ankeranordnung im wesentlichen unangetastet, das heisst der Ankerkopf verbleibt erfindungsgemäss während des Montageschritts unverändert in der Montage-Verschraubungsposition, wobei die Aktivierung des Spreizmechanismus des Spreizankers insbesondere durch die Last des Anbauteils erfolgen kann. Diese Art der Montage kann für viele Anwendungen völlig ausreichend sein. Erst im Rahmen des Demontageschritts wird die Montage-Verschraubungsposition aufgehoben und die Verschraubung zwischen Ankerkopf und Spreizanker gelöst. In der Folge kann das Anbauteil einfach vom Spreizanker abgezogen und entfernt werden. Der Spreizanker bleibt im Substrat zurück und kann für eine Neuinstallation verwendet werden. Die Verschraubung ermöglicht somit in der erfindungsgemässen Verfahrensweise eine besonders einfache und zuverlässige Demontage und stellt darüber hinaus die Option einer Neumontage am selben Spreizanker zur Verfügung, und dies, ohne den Montageschritt zu beeinträchtigen, was den Aufwand in einer Gesamtbetrachtung deutlich senken kann. Die Erfindung schlägt also insbesondere vor, die Verschraubung zwischen Spreizanker und Ankerkopf erst bei der Demontage einzusetzen, was insbesondere für die Verwendung mit Brandschutzplatten im Tunnelbau vorteilhaft sein kann.

Ein erfindungsgemässer Spreizanker kann insbesondere zumindest einen Spreizkörper sowie einen Ankerbolzen mit einem Spreizbereich aufweisen, welcher den Spreizkörper bei Zug im Ankerbolzen radial nach aussen drängt und den Spreizanker so im Substrat verankert. Der Spreizmechanismus wird in diesem Fall durch den Spreizkörper und den Spreizbereich gebildet. Beispielsweise kann der Spreizkörper ein Keil oder eine Spreizhülse, welche den Ankerbolzen ringartig umgibt, sein. Zweckmässigerweise konvergiert der Ankerbolzen am Spreizbereich nach hinten hin. Der Spreizbereich kann vorzugsweise ein Spreizkonus sein, insbesondere wenn der Spreizkörper eine Spreizhülse ist. Das Aussengewinde ist zweckmässigerweise am Ankerbolzen angeordnet. Vorzugsweise ist der Spreizanker ein kraftkontrollierter Spreizanker.

Die Begriffe vorne und hinten beziehungsweise rückwärtig sollen hier vorzugsweise einheitlich verwendet werden. Soweit hier von "nachfolgen" die Rede ist, soll dies insbesondere ein Nachfolgen in zeitlicher Hinsicht bedeuten.

Das Aussengewinde muss nicht auf den Bereich hinter dem Spreizmechanismus beschränkt sein. Vielmehr kann auch eine Gewindeverlängerung vorgesehen sein, welche in den Spreizmechanismus hineinreicht. Besonders bevorzugt ist es aber, dass das Aussengewinde vom Spreizmechanismus und/oder Spreizbereich beabstandet ist. Hierdurch ist eine besonders einfache Konstruktion gegeben. Vorzugsweise besteht der Ankerbolzen vom Spreizbereich bis zum Aussengewinde aus einem Stück und/oder ist der Spreizbereich drehfest bezüglich dem Aussengewinde angeordnet.

Der Ankerkopf mit seinem Innengewinde bildet eine Mutter. Das Aussengewinde und das Innengewinde korrespondieren miteinander, was insbesondere beinhalten kann, dass die beiden Gewinde so bemessen sind, dass ein Aufschrauben und Abschrauben möglich ist. Der Ankerkopf ist insbesondere über die beiden korrespondierenden Gewinde, das heisst Aussengewinde und Innengewinde, mit dem Spreizanker in der Montage-Verschraubungsposition verschraubt.

Im Montageschritt wird der Spreizanker vorzugsweise durch eine im Anbauteil vorgesehene, insbesondere vorgebohrte, Durchgangsöffnung hindurch in das Substrat eingesteckt. Insbesondere wird im Montageschritt der Spreizanker in eine Öffnung im Substrat eingesteckt. Da der erfindungsgemässe Demontageschritt keinen Zugang zum Spreizmechanismus erfordert, kann die Öffnung im Substrat ein Sackloch sein. Die Durchgangsöffnung im Anbauteil und/oder die Öffnung im Substrat sind vorzugsweise Bohrlöcher und/oder zumindest annähernd zylindrisch.

Nach Abschluss des Montageschritts wird das Anbauteil vom Ankerkopf an der Ankeranordnung und die Ankeranordnung wiederum vom Spreizmechanismus am Substrat gehalten. Der Spreizmechanismus hemmt, vorzugsweise widerhakenartig, ein Zurückziehen des Spreizankers aus dem Substrat. Im Montageschritt wird der Spreizmechanismus zweckmässigerweise zumindest teilweise aktiviert. Ein Aktivieren des Spreizmechanismus im Montageschritt kann beispielsweise durch das Eigengewicht des Anbauteils erfolge. Grundsätzlich ist es aber auch denkbar, den Spreizanker zum Aktivieren des Spreizmechanismus aktiv axial zu belasten.

Während des Montageschritts bleibt die Verschraubung erfindungsgemäss unangetastet und der Ankerkopf somit stets in der Montage-Verschraubungsposition. Auf den Montageschritt folgt zeitlich der Demontageschritt nach, wobei der Zeitraum zwischen dem Montageschritt und dem Demontageschritt relativ lang sein kann, und auch Jahre betragen kann. Im Demontageschritt wird der Ankerkopf vom Spreizanker abgeschraubt, so dass das Anbauteil vom Spreizanker, insbesondere axial, abgezogen werden kann, wobei der Spreizanker insbesondere im Substrat zurückbleibt. Das Abziehen des Anbauteils vom Spreizanker kann vorzugsweise als Teil des Demontageschritts angesehen werden. Zweckmässigerweise wird die Montage-Verschraubungsposition im Demontageschritt erstmalig aufgehoben. Für eine besonders schnelle Demontage wird der Ankerkopf im Demontageschritt vorzugsweise ausschliesslich, insbesondere kontinuierlich, abgeschraubt, also schraubenförmig nach hinten bewegt, und es findet keine zur Abschraub-Bewegung entgegengesetzte, das heisst keine nach vorne gerichtete Bewegung des Ankerkopfs am Spreizanker statt.

Insbesondere folgt dem Montageschritt ein Haltezeitraum nach, vorzugsweise unmittelbar nach, während dem die Ankeranordnung das Anbauteil am Substrat hält. Während dieses Haltezeitraums ist das Anbauteil bestimmungsgemäss am Substrat montiert und/oder kann das Anbauteil seinen vorgesehenen Zweck zumindest zeitweise erfüllen. Der Haltezeitraum kann vergleichsweise lang sein und sich beispielsweise über einen Zeitraum von mindestens einem Tag, einem Monat oder einem Jahr erstreckt. Zweckmässigerweise wird der Ankerkopf während des Haltezeitraums in der Montage-Verschraubungsposition am Spreizanker belassen. Für eine Manipulation der Verschraubung besteht während des Haltezeitraums regelmässig keine Notwendigkeit. Dem Haltezeitraum folgt wiederum der Demontageschritt nach, vorzugsweise unmittelbar.

Im Demontageschritt kann, nach dem Abschrauben des Ankerkopfs vom Spreizanker, das Anbauteil vom Spreizanker abgezogen und abgenommen werden. Besonders vorteilhaft ist ein dem Demontageschritt nachfolgender Neumontageschritt, bei dem das Anbauteil oder ein weiteres Anbauteil auf den Spreizanker, insbesondere auf den im Substrat verankerten Spreizanker, aufgesteckt wird und das Anbauteil beziehungsweise das weitere Anbauteil durch Aufschrauben des Ankerkopfs oder eines weiteren Ankerkopfs auf den Spreizanker, insbesondere auf dessen Aussengewinde, am Spreizanker festgelegt wird. Demgemäss wird der montierte Spreizanker wiederverwendet, beispielsweise nachdem die Revision abgeschlossen ist und wieder ein Anbauteil an derselben Stelle montiert werden muss, was den Vorteil eines besonders geringen Aufwands hat. Das Anbauteil, welches im Neumontageschritt festgelegt wird, kann das vorher im Demontageschritt abgenommene Anbauteil oder ein weiteres Anbauteil sein. Der Ankerkopf, welcher im Neumontageschritt aufgeschraubt wird, kann der vorher im Demontageschritt abgeschraubte Ankerkopf oder ein weiterer Ankerkopf sein. Insbesondere kann der Ankerkopf beziehungsweise der weitere Ankerkopf im Neumontageschritt auf das Aussengewinde des Spreizankers aufgeschraubt werden.

Der Ankerkopf ist zweckmässigerweise querschnittsgrösser als die Durchgangsöffnung im Anbauteil, so dass das Anbauteil ohne zusätzliche Unterlegscheiben vom Ankerkopf gehalten werden kann. Insbesondere kann vorgesehen sein, dass der Ankerkopf einen maximalen Durchmesser aufweist, der zumindest das Doppelte oder das Dreifache, vorzugsweise etwa das Vierfache, eines maximalen Durchmessers des Spreizankers beträgt. Demgemäss ist ein vergleichsweise grosser Ankerkopf gegeben, was die Belastung des Anbauteils in vorteilhafter Weise reduzieren kann.

Eine weitere bevorzugte Ausgestaltung der Erfindung liegt darin, dass der Ankerkopf in der Montage-Verschraubungsposition den Spreizanker nach hinten überragt und/oder dass der Spreizanker in der Montage-Verschraubungsposition im Ankerkopf, insbesondere rückseitig im Ankerkopf, versenkt ist. Hierdurch kann einem unerwünschten Verhaken von Gegenständen am Spreizanker in besonders einfacher und zuverlässiger Weise entgegengewirkt werden.

Weiterhin ist es besonders vorteilhaft, dass das Innengewinde des Ankerkopfs einen ovalen Querschnitt aufweist. Hierdurch erhält die Verschraubung in besonders einfacher Weise eine Selbsthemmung, so dass die Montage-Verschraubungsposition im Montageschritt besonders zuverlässig eingehalten wird und der Ankerkopf insbesondere nicht durch bei der Montage auftretende Schlagkräfte abfällt. Alternativ oder zusätzlich kann auch das Aussengewinde des Spreizankers einen ovalen Querschnitt aufweisen. Der ovale Querschnitt am Innengewinde des Ankerkopfs ist aber häufig einfacher herzustellen, beispielsweise durch leichtes radiales Quetschen des Ankerkopfs nach der Fertigung des Innengewindes

Die Erfindung kann insbesondere im Tunnelbau zum Einsatz kommen. Besonders bevorzugt ist es, dass das Anbauteil eine Brandschutzplatte und/oder dass das Substrat ein Betonsubstrat ist. Insbesondere kann das Substrat durch einen Tübbing gebildet werden.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung einer Ankeranordnung für eine erfindungsgemässe Verwendung;
- Figur 2:: eine Querschnittsansicht des Ankerkopfs der Ankeranordnung nach Figur 1; und
- Figuren 3 bis 12:: aufeinanderfolgende Stadien einer Ausgestaltung der erfindungsgemässen Verwendung des Spreizankers aus Figur 1, jeweils in Seitenansicht. Hierbei zeigen:

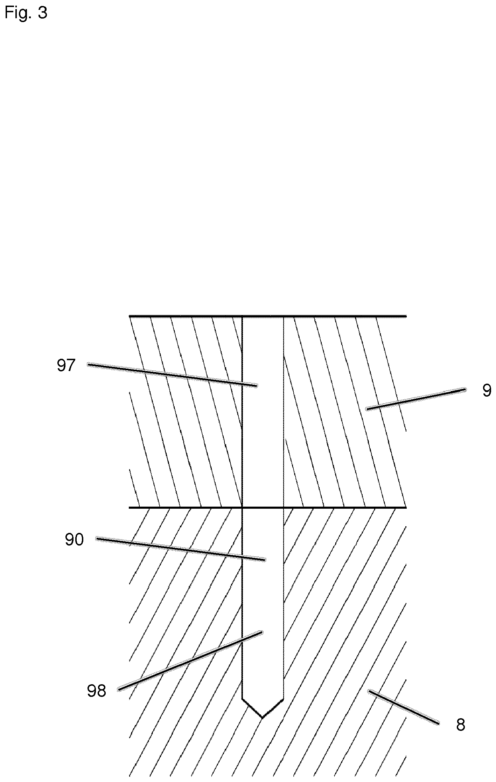

- Figur 3: einen Teil eines Vorbereitungsschritts;

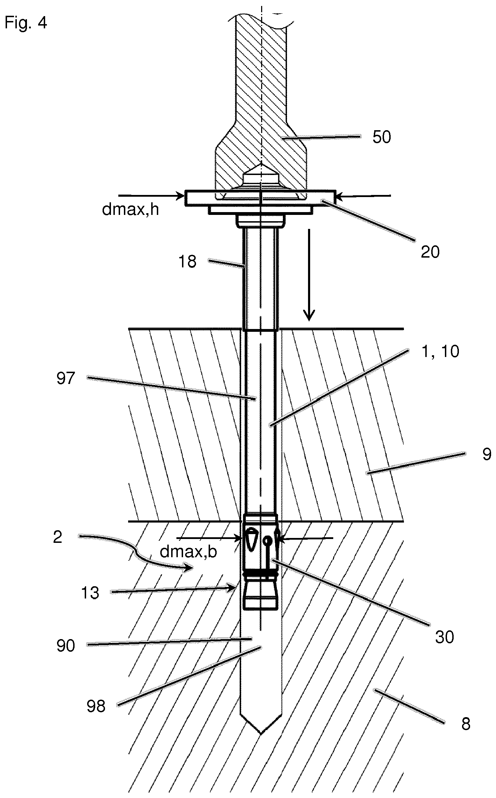

- Figur 4: einen Teil des Montageschritts;

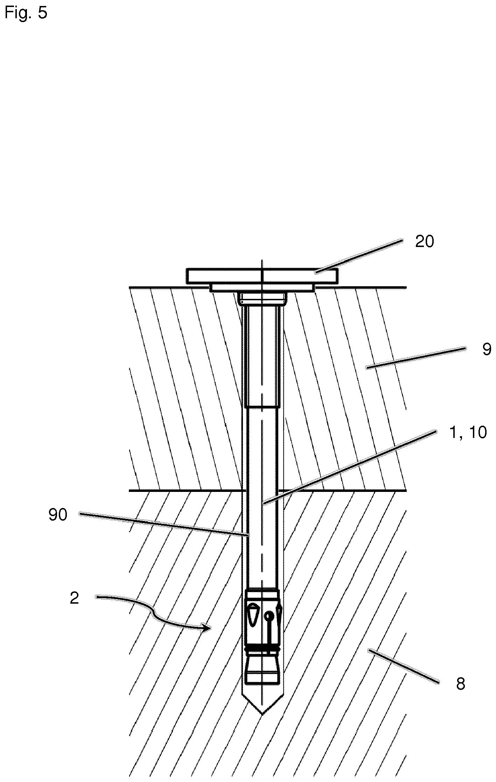

- Figur 5: das Ende des Montageschritts und den Haltezeitraum;

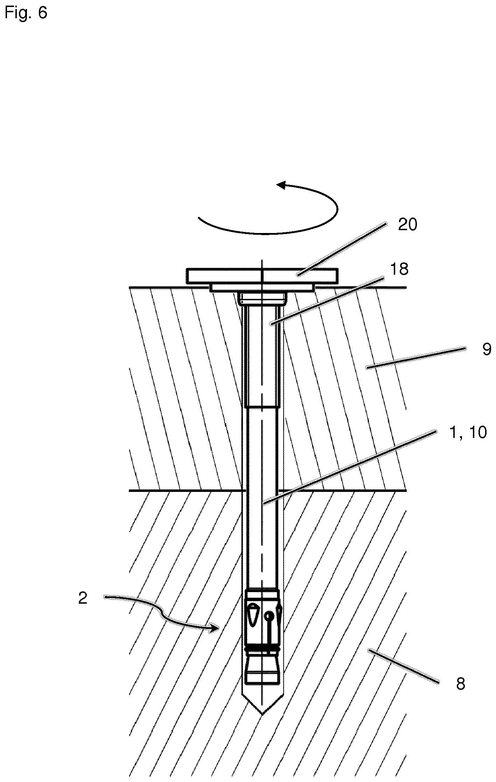

- Figuren 6 bis 9: den Demontageschritt; und

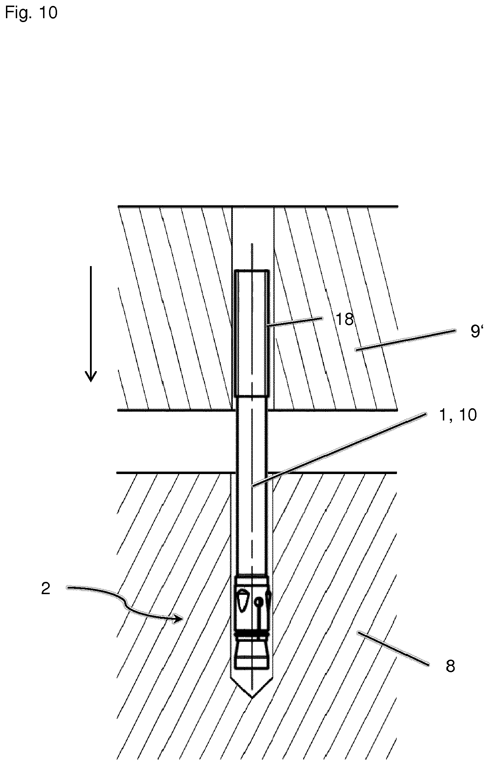

- Figuren 10 bis 12: den Neumontageschritt.

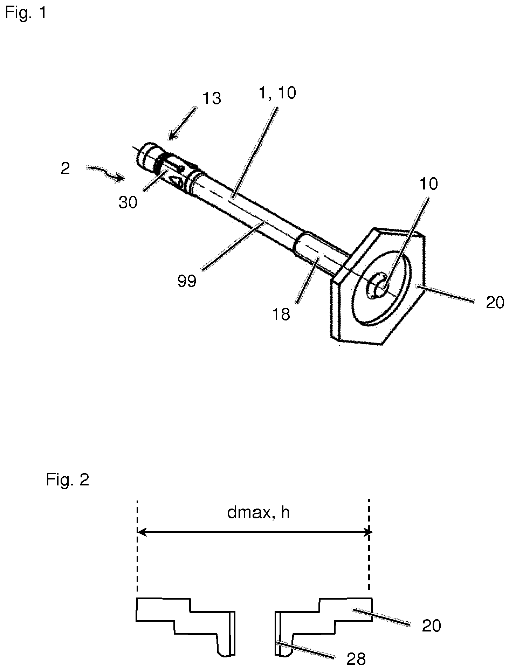

Die Figuren 1 bis 2 zeigen ein erstes Ausführungsbeispiel einer erfindungsgemässen Ankeranordnung zum Einsatz in einem erfindungsgemässen Verwendungsverfahren. Die Ankeranordnung weist einen Spreizanker 1 sowie einen in einem rückwärtigen Bereich des Spreizankers 1 mit dem Spreizanker 1 verschraubten Ankerkopf 20 auf. Der Spreizanker 1 weist einen länglichen Ankerbolzen 10 und einen als Spreizhülse ausgeführten Spreizkörper 30 auf, welcher den Ankerbolzen 10 ringartig umgibt. In einem entlang der Längsachse 99 des Ankerbolzens 10 vorderen Endbereich weist der Ankerbolzen 10 einen dem Spreizkörper 30 vorgelagerten Spreizbereich 13 auf. Im Spreizbereich 13 nimmt der Querschnitt des Ankerbolzens 10 nach vorne hin zu, das heisst im Spreizbereich 13 konvergiert der Ankerbolzen 10 nach hinten hin. Beim Verankern des Spreizankers 1 läuft der Spreizkörper 30 auf den Spreizbereich 13 des Ankerbolzens 10 auf und wird hierbei radial gespreizt. Der Spreizbereich 13 und der Spreizkörper 30 bilden zusammen einen Spreizmechanismus 2 des Spreizankers 1, welcher zum Verankern des Spreizankers 1 dient.

In einem rückwärtigen Bereich das Ankerbolzens 10 weist der Spreizanker 1 ein aussenseitig am Ankerbolzen 10 angeordnetes Aussengewinde 18 auf. Der Ankerkopf 20 weist eine zentrale Durchgangsöffnung mit einem Innengewinde 28 auf, wobei dieses Innengewinde 28 mit dem Aussengewinde 18 des Ankerbolzens 10 korrespondiert. Die Verschraubung von Ankerkopf 20 und Spreizanker 1 ist über das Aussengewinde 18 und das Innengewinde 28 gebildet.

Am Ankerkopf 20 weist die Ankeranordnung ihr globales Querschnittsmaximum auf, das heisst dort ist ihr Querschnitt, insbesondere bezogen auf die Längsachse 99, am grössten. Wie insbesondere Figur 4 zeigt weist der Ankerkopf 20 einen maximalen Durchmesser dmax,h auf, der etwa das Vierfache eines maximalen Durchmessers dmax,b des Spreizankers 1 beträgt, wobei der maximale Durchmessers dmax,b des Spreizankers 1 für eine besonders zuverlässige Verankerung vorzugsweise am Spreizkörper 30 gegeben ist. In der dargestellten Ausführungsform weist der Ankerkopf 20 einen polygonalen Aussenumfang auf, was einem unerwünschten Wegrollen entgegenwirken kann. Es ist auch ein runder Aussenumfang denkbar.

Die Figuren 3 bis 12 zeigen aufeinanderfolgende Stadien bei der bestimmungsgemässen Verwendung einer Ankeranordnung gemäss Figuren 1 und 2.

Zunächst werden, wie in Figur 3 dargestellt, ein Substrat 8 und ein Anbauteil 9 vorbereitend bereitgestellt, wobei sich ein als Bohrloch ausgebildetes, etwa zylindrisches Loch 90 durch das Anbauteil 9 in das Substrat 8 erstreckt. Das Loch 90 besteht aus einer Durchgangsöffnung 97 im Anbauteil 9, welche das Anbauteil 9 vollständig durchläuft, und aus einer als Sackloch ausgebildeten Öffnung 98 im Substrat 8, die im Substrat 8 endet.

Sodann beginnt der Montageschritt. Im Montageschritt wird, wie in Figur 4 dargestellt, der Spreizanker 1 mit seinem vorderen Ende mit dem Spreizmechanismus 2 voran in das Loch 90 eingesteckt und der Spreizanker 1, wie in Figur 4 mit einem Pfeil angedeutet, durch Aufbringen von axial nach vorne gerichteten Kräften, das heisst parallel zur Längsachse 99 nach vorne gerichteten Kräften, durch die Durchgangsöffnung 97 im Anbauteil 9 hindurch in die Öffnung 98 im Substrat 8 eingetrieben. Die axial gerichteten Kräfte zum Eintreiben des Spreizankers 1 können beispielsweise unmittelbar auf die Rückseite des Ankerbolzens 10 aufgebracht werden oder auch auf den Ankerkopf 20, welcher die Kräfte über die korrespondierenden Gewinde 28 und 18 an den Ankerbolzen 10 weitergibt. Beispielsweise können die Kräfte mittels Schlägen eines Hammers aufgebracht werden. Besonders bevorzugt ist es, dass zum Aufbringen der axial nach vorne gerichteten Kräfte auf den Spreizanker 1 das in Figur 4 dargestellt Installationswerkzeug 50 verwendet wird.

Die korrespondierenden Gewinde 28 und 18 sind so konfiguriert, dass sich die Verschraubung zwischen Spreizanker 1 und Ankerkopf 20 beim Eintreiben nicht verdreht, und dass der Ankerkopf 20 während des Eintreibens stets in einer Montage-Verschraubungsposition am Spreizanker 1 verbleibt. Beispielsweise kann das Innengewinde 28 am Ankerkopf 20 leicht oval gequetscht sein, um eine entsprechende Selbsthemmung zu erzielen.

Der Spreizanker 1 wird so tief in das Loch 90 eingetrieben, bis der Ankerkopf 20 - unmittelbar oder mittelbar, beispielsweise über eine in den Figuren nicht dargestellte Unterlegscheibe - auf dem Anbauteil 9 anliegt. Durch Zug im Ankerbolzen 10, der beispielsweise durch das Gewicht des Anbauteils 9 erzeugt werden kann, kann nun der Spreizmechanismus 2 des Spreizankers 1 aktiviert werden. Der Spreizanker 1 und das vom Spreizanker 1 über den mit dem Spreizanker 1 verschraubten Ankerkopf 20 gehaltene Anbauteil 9 sind nun mittels des Spreizmechanismus 2 des Spreizankers 1 am Substrat 8 gesichert. Damit ist der Montageschritt abgeschlossen. Der resultierende Zustand ist in Figur 5 gezeigt.

Obwohl es grundsätzlich möglich wäre, durch Anziehen des Ankerkopfs 20 am Spreizanker 1 am Ende des Montageschritts eine erhöhte Vorspannung im Spreizanker 1 zu erzeugen, bleibt die Verschraubung zwischen Ankerkopf 20 und Spreizanker 1 nach einem ersten Grundgedanken der Erfindung während des Montageschritts unangetastet, da eine erhöhte Vorspannung in einer Reihe von Anwendungen nicht erforderlich ist. Erfindungsgemäss verbleibt also der Ankerkopf 20 während des gesamten Montageschritts in der Montage-Verschraubungsposition am Spreizanker 1. Wie insbesondere die Figuren 1 und 5 zeigen, ist der Spreizanker 1 mit seinem Ankerbolzen 10 in der Montage-Verschraubungsposition im Ankerkopf 20 versenkt und steht damit nicht rückseitig über den Ankerkopf 20 über.

Sodann erfolgt ein Haltezeitraum, in welchem der Spreizanker 1 über einen längeren Zeitraum, der durchaus auch mehrere Jahre dauern kann, in dem in Figur 5 gezeigten Zustand verbleibt, und in welchem der Spreizanker 1 das Anbauteil 9 bestimmungsgemäss am Substrat 8 hält. Vorzugsweise verbleibt der Ankerkopf 20 auch während des Haltezeitraums in der Montage-Verschraubungsposition am Spreizanker 1, da es während des Haltezeitraums regelmässig keinen Grund dafür gibt, die Verschraubung zu manipulieren.

Beispielsweise zum Austausch eines beschädigten Anbauteils 9 oder zu Revisionszwecken kann es erforderlich werden, das Anbauteil 9 vom Substrat 8 abzunehmen. Dies erfolgt im erfindungsgemässen Demontageschritt, welcher in den Figuren 6 bis 9 dargestellt ist.

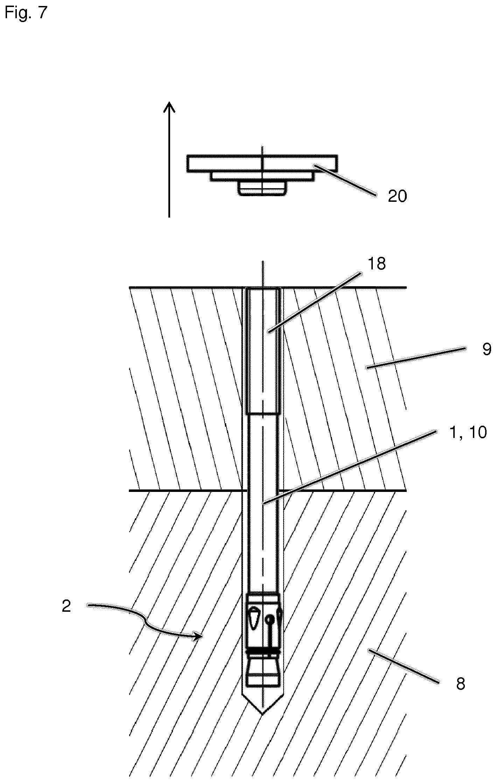

Wie in Figur 6 mit einem Pfeil angedeutet ist, wird im Demontageschritt ein Drehmoment in Abschraubrichtung auf den Ankerkopf 20 ausgeübt, der Ankerkopf 20 vom Spreizanker 1 abgeschraubt und der Ankerkopf 20 anschliessend, wie in der folgenden Figur 7 mit einem Pfeil angedeutet ist, vom Spreizanker 1 abgenommen. Somit wird im Demontageschritt die Montage-Verschraubungsposition des Ankerkopfs 20 am Spreizanker 1, insbesondere erstmalig, aufgehoben. Das Gegenmoment, welches den Spreizanker 1 beim Aufbringen des Drehmoments auf den Ankerkopf 20 rotatorisch festhält und damit ein Abschrauben des Ankerkopfs 20 ermöglich, wird am Spreizmechanismus 2 aufgebracht, insbesondere durch Reibung am Spreizmechanismus 2. Um einem Durchdrehen des Ankerbolzens 10 am Spreizmechanismus 2 besonders effizient entgegenzuwirken, kann auch ein Formschluss am Spreizmechanismus 2 vorgesehen werden, beispielsweise durch einen im Querschnitt ovalen oder polygonalen Querschnitt des Ankerbolzens 10 im Spreizbereich 13, der eine Verzahnung mit dem Spreizkörper 30 bewirkt. Das Aufbringen des Drehmoments auf den Ankerkopf 20 kann beispielsweise über eine Standardnuss erfolgen.

Besonders bevorzugt ist es, dass der Ankerkopf 20 im Demontageschritt ausschliesslich abgeschraubt wird, was eine besonders schnelle Durchführung ermöglicht. Es kann aber auch ein kurzes Anziehen des Ankerkopfs 20, also ein tieferes Aufschrauben des Ankerkopfs 20, am Spreizanker 1 vorgesehen werden, beispielsweise um die Verschraubung initial zu lösen.

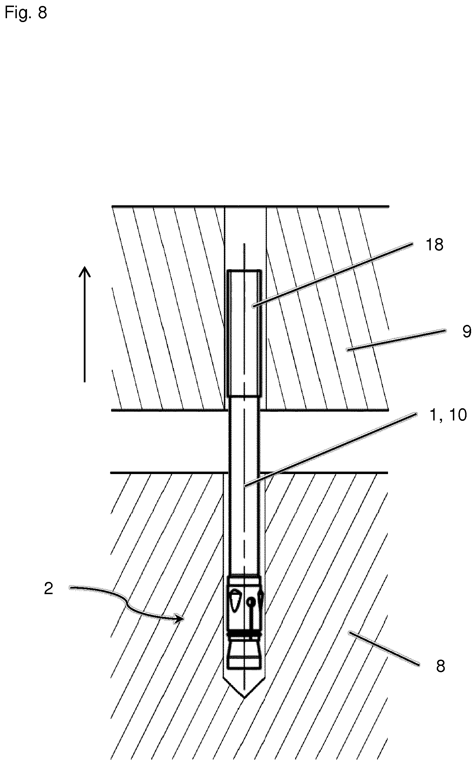

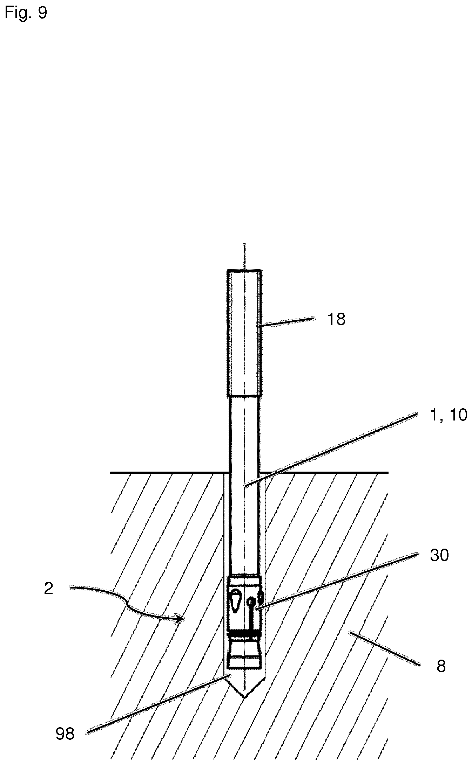

Nachdem der Ankerkopf 20 wie in Figur 7 gezeigt abgenommen wurde, und nachdem gegebenenfalls weitere das Anbauteil 9 haltende Anker demontiert wurden, wird das Anbauteil 9 wie in Figur 8 mit einem Pfeil angedeutet vom Spreizanker 1 abgezogen und vom Substrat 8 entfernt. Dabei bleibt der Spreizanker 1, der mit seinem Spreizmechanismus 2 weiterhin in der Öffnung 98 des Substrats 8 verankert ist, im Substrat 8 zurück. Der resultierende Zustand ist in Figur 9 gezeigt. Damit ist der Demontageschritt abgeschlossen und insbesondere der vormals vom Anbauteil 9 bedeckte Bereich des Substrats für Revisionsarbeiten zugänglich.

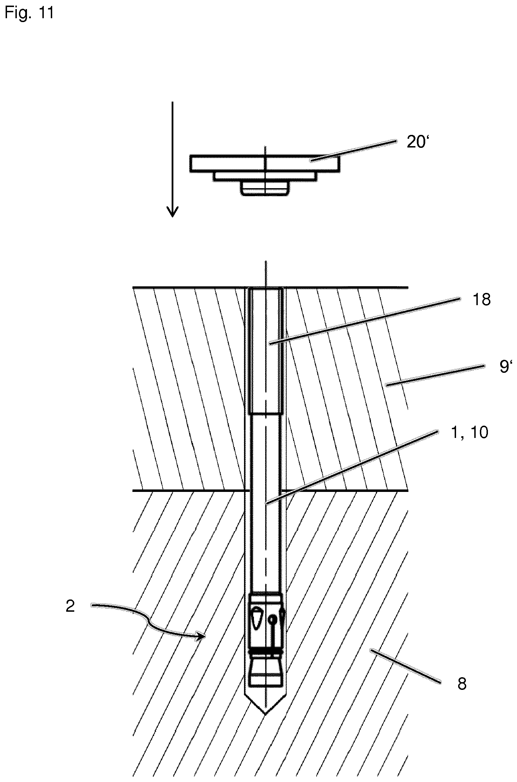

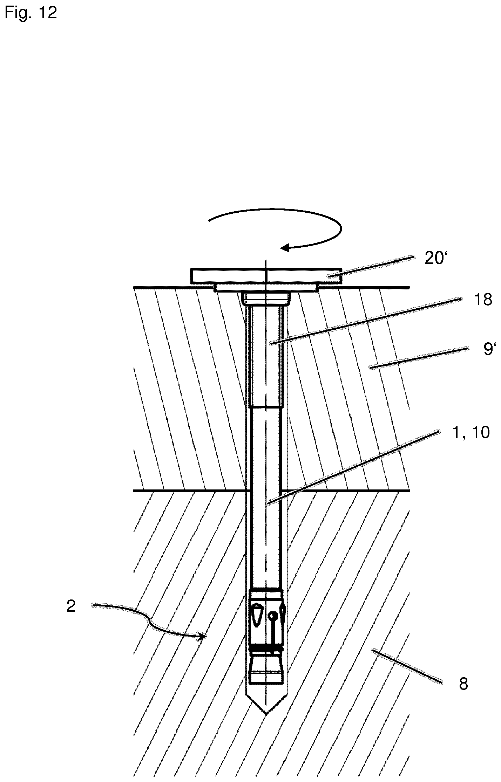

Auf den Demontageschritt kann der in den Figuren 10 bis 12 dargestellt Neumontageschritt folgen. Im Demontageschritt kann, wie in Figur 10 gezeigt, ein weiteres Anbauteil 9' auf den im Substrat 8 verankerten Spreizanker 1 aufgesteckt und dann dort, wie in den Figuren 11 und 12 gezeigt, durch Anbringen eines weiteren Ankerkopfs 20' am Spreizanker 1 und Aufschrauben des weiteren Ankerkopfs 20' auf das Aussengewinde 18 des Spreizankers 1 festgelegt werden. Sofern nicht wesentlich beschädigt kann anstelle des weiteren Anbauteils 9' auch das zuvor genannte ursprüngliche Anbauteil 9 und/oder anstelle des weiteren Ankerkopfs 20' der zuvor genannte ursprüngliche Ankerkopf 20 verwendet werden.

## Patentansprüche

1. Verwendung einer Ankeranordnung bestehend aus einem Spreizanker (1), der einen Spreizmechanismus (2) und hinter dem Spreizmechanismus (2) ein Aussengewinde (18) aufweist, und aus einem Ankerkopf (20), der ein zum Aussengewinde (18) des Spreizankers (1) korrespondierendes Innengewinde (28) aufweist und mit dem Spreizanker (1) in einer Montage-Verschraubungsposition verschraubt ist, mit
- einem Montageschritt, in welchem der Spreizanker (1) durch ein Anbauteil (9) hindurch in ein Substrat (8) eingesteckt wird und das Anbauteil (9) mittels der Ankeranordnung am Substrat (8) gesichert wird, wobei der Ankerkopf (20) während des Montageschritts in der Montage-Verschraubungsposition am Spreizanker (1) verbleibt, und
- einem dem Montageschritt nachfolgenden Demontageschritt, in welchem die Montage-Verschraubungsposition aufgehoben und der Ankerkopf (20) vom Spreizanker (1) abgeschraubt wird.

2. Verwendung nach Anspruch 1,
**gekennzeichnet durch**
einen dem Montageschritt nachfolgenden Haltezeitraum, während dem die Ankeranordnung das Anbauteil (9) am Substrat (8) hält und während dem der Ankerkopf (20) in der Montage-Verschraubungsposition am Spreizanker (1) belassen wird, wobei sich der Haltezeitraum über einen Zeitraum von mindestens einem Tag, einem Monat oder einem Jahr erstreckt und wobei der Demontageschritt dem Haltezeitraum nachfolgt.

3. Verwendung nach einem der vorstehenden Ansprüche,
**gekennzeichnet durch**
einen dem Demontageschritt nachfolgenden Neumontageschritt, in welchem das Anbauteil (9) oder ein weiteres Anbauteil (9') auf den Spreizanker (1) aufgesteckt wird und das Anbauteil (9) beziehungsweise das weitere Anbauteil (9') **durch** Aufschrauben des Ankerkopfs (20) oder eines weiteren Ankerkopfs (20') auf den Spreizanker (1) am Spreizanker (1) festgelegt wird.

4. Verwendung nach einem der vorstehenden Ansprüche,
**dadurch gekennzeichnet,**
**dass** der Ankerkopf (20) einen maximalen Durchmesser (dmax,h) aufweist, der zumindest das Doppelte oder das Dreifache eines maximalen Durchmessers (dmax,b) des Spreizankers (1) beträgt.

5. Verwendung nach einem der vorstehenden Ansprüche,
**dadurch gekennzeichnet,**
**dass** der Ankerkopf (20) in der Montage-Verschraubungsposition den Spreizanker (1) nach hinten überragt.

6. Verwendung nach einem der vorstehenden Ansprüche,
**dadurch gekennzeichnet,**
**dass** das Innengewinde (28) des Ankerkopfs (20) einen ovalen Querschnitt aufweist.

7. Verwendung nach einem der vorstehenden Ansprüche,
**dadurch gekennzeichnet,**
**dass** das Anbauteil (9) eine Brandschutzplatte und das Substrat (8) ein Betonsubstrat ist.
